(19) Europäisches Patentamt
European Patent Office
Office européen des brevets

(11) EP 4 410 862 A1

(12) EUROPEAN PATENT APPLICATION
published in accordance with Art. 153(4) EPC

(43) Date of publication:
**07.08.2024 Bulletin 2024/32**

(21) Application number: **22876138.3**

(22) Date of filing: **26.09.2022**

(51) International Patent Classification (IPC):
***C08G 63/84*** *(2006.01)*

(52) Cooperative Patent Classification (CPC):
**C08G 63/84**

(86) International application number:
**PCT/JP2022/035753**

(87) International publication number:
**WO 2023/054271 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2021 JP 2021161890**

(71) Applicant: **Toyobo Co., Ltd.**
**Kita-ku**
**Osaka-shi, Osaka 530-0001 (JP)**

(72) Inventors:
- **YAMAMOTO, Yu**
  **Otsu-shi, Shiga 520-0292 (JP)**
- **MORIYAMA, Nobuo**
  **Otsu-shi, Shiga 520-0292 (JP)**
- **KINAMI, Maki**
  **Otsu-shi, Shiga 520-0292 (JP)**

(74) Representative: **Müller-Boré & Partner Patentanwälte PartG mbB**
**Friedenheimer Brücke 21**
**80639 München (DE)**

# (54) METHOD FOR PRODUCING RECYCLED POLYESTER RESIN

(57) An object of the present invention is to provide a method for producing a regenerated polyester resin with reduced coloration at low cost. A method for producing a regenerated polyester resin, comprising: the first step of mixing a polyester resin (A) collected for recycling, a polycarboxylic acid (B), and a polyol (C) followed by depolymerizing and esterifying the polyester resin (A); and the second step of performing polycondensation of a reactant produced by the first step to form the regenerated polyester resin, wherein a content of the polyester resin (A) is from 5 parts by mass to 80 parts by mass with respect to 100 parts by mass of the regenerated polyester resin, the polycondensation in the second step is performed in the presence of an aluminum compound, and a content of the aluminum compound is from 5 ppm by mass to 100 ppm by mass on an aluminum element basis with respect to the reactant produced by the first step.

EP 4 410 862 A1

## Description

### TECHNICAL FIELD

The present invention relates to a method for producing a regenerated polyester resin.

### BACKGROUND ART

Polyesters such as polyethylene terephthalate (PET) and polyethylene naphthalate (PEN) have been widely used in the production of, for example, containers for filling beverages, because these polyesters have excellent mechanical properties, chemical stability, heat resistance, gas barrier properties, transparency, and cost-effectiveness. As the polyester for producing the containers, particularly, polyethylene terephthalate produced with an antimony catalyst and a germanium catalyst as polymerization catalysts has been used in most cases due to cost advantage.

In recent years, for the purpose of reducing the environmental load, containers have been produced with regenerated polyester obtained by recycling polyester containers collected after use by various methods. As methods for recycling, the following chemical recycling method and mechanical recycling method are known.

The chemical recycling is a method in which the collected polyester is decomposed to a monomer level and polymerized again to obtain a polyester resin. However, the chemical recycling demands a large amount of energy in addition to a complicated process, therefore, a large cost is required for recycling.

The mechanical recycling is a method in which the collected polyester is sorted, crushed, and washed first to obtain resin flakes from which contaminants and a foreign matter are removed, then the resin flakes are treated for a certain period of time under the conditions of high temperature and a reduced pressure to obtain a polyester from which contaminants inside of the resin are removed. Polyesters produced through the mechanical recycling has advantages of low environmental load and cost-effectiveness compared to virgin polyesters (polyesters that have not yet been recycled) and chemically recycled polyesters obtained through the chemical recycling. However, polyesters produced through the mechanical recycling have disadvantages of coloration and a large amount of acetaldehyde and cyclic trimer compared to the virgin polyesters and the chemically recycled polyesters, resulting in degraded quality.

As a different method from the chemical recycling and the mechanical recycling described above, the following method in which polyethylene terephthalate is decomposed by reacting with a low molecular weight polyol, subsequently, the resulting decomposition products undergo a condensation reaction with a polybasic acid, yielding a terephthalic acid-based polyester polyol has been known (For example, Patent Document 1).

### CITATION LIST

### PATENT DOCUMENT

Patent Document 1: JP-A-2000-191766

### SUMMARY OF THE INVENTION

### PROBLEMS TO BE SOLVED BY THE INVENTION

However, the object of the production method disclosed in Patent Document 1 is to produce a polyester polyol for polyurethane resin, and the control of coloration of the regenerated polyester has not been studied. Further, in the production method disclosed in Patent Document 1 to obtain a polyester polyol having low molecular weight (low condensate), the condensation reaction is carried out after the decomposition of polyethylene terephthalate through a reaction with a low molecular weight polyol, thereby requiring further reduction of cost by decreasing the number of production steps. Therefore, the present invention has been done to solve above problems of the conventional art, and it is an object of the present invention to provide a method for producing a regenerated polyester with inhibited coloration at low cost.

### SOLUTION TO THE PROBLEMS

As a result of diligent studies to solve above problems, the present inventors have found that a regenerated polyester resin with reduced coloration can be produced at low cost by a production method comprising the first step of mixing a polyester resin (A) collected for recycling, a polycarboxylic acid (B), and a polyol (C) followed by depolymerizing and esterifying the polyester resin (A); and the second step of performing polycondensation of a reactant produced by the first step to form the regenerated polyester resin, with the use of predetermined amounts of the polyester resin (A)

collected for recycling and an aluminium catalyst.

Specifically, the present invention has the following features.

1. A method for producing a regenerated polyester resin, comprising: the first step of mixing a polyester resin (A) collected for recycling, a polycarboxylic acid (B), and a polyol (C) followed by depolymerizing and esterifying the polyester resin (A); and the second step of performing polycondensation of a reactant produced by the first step to form the regenerated polyester resin, wherein a content of the polyester resin (A) is from 5 parts by mass to 80 parts by mass with respect to 100 parts by mass of the regenerated polyester resin, the polycondensation in the second step is performed in the presence of an aluminum compound, and a content of the aluminum compound is from 5 ppm by mass to 100 ppm by mass on an aluminum element basis with respect to the reactant produced by the first step.
2. The method for producing the regenerated polyester resin according to the above 1, wherein the polycondensation in the second step is performed with the presence of a phosphorus compound, and a content of the phosphorus compound is from 3 ppm by mass to 1000 ppm by mass on a phosphorus element basis with respect to the reactant.
3. The method for producing the regenerated polyester resin according to the above 2, wherein the phosphorus compound is a compound having phosphorus element and phenolic structure in the same molecule.
4. The method for producing the regenerated polyester resin according to any one of the above 1 to 3, wherein the polyester resin (A) has a dicarboxylic acid unit originating from an aromatic dicarboxylic acid and a diol unit originating from an alkylene glycol having 2 to 6 carbon atoms.
5. The method for producing the regenerated polyester resin according to any one of the above 1 to 4, wherein the polyester resin (A) comprises at least one element selected from the group consisting of antimony element, titanium element, and germanium element.
6. The method for producing the regenerated polyester resin according to the above 5, wherein the polyester resin (A) comprises at least one of the antimony element, the titanium element, and the germanium element with a total content of from 2 ppm by mass to 500 ppm by mass.

## EFFECTS OF THE INVENTION

The regenerated polyester resin with reduced coloration can be produced at low cost by producing a regenerated polyester resin by the production method comprising the first step of mixing a polyester resin (A) collected for recycling, a polycarboxylic acid (B), and a polyol (C) followed by depolymerizing and esterifying the polyester resin (A); and the second step of performing polycondensation of a reactant produced by the first step to form the regenerated polyester resin, with the use of predetermined amount of the polyester resin (A) collected for recycling and an aluminium catalyst.

## BRIEF DESCRIPTION OF DRAWING

[Fig. 1] Fig. 1 is a schematic diagram with a chart as a result of measurement performed by using a differential scanning calorimeter.

## DESCRIPTION OF EMBODIMENTS

The method for producing a regenerated polyester resin (hereinafter, referred to as regenerated polyester resin (D)) of the present invention comprises the first step of mixing a polyester resin (A) collected for recycling, a polycarboxylic acid (B), and a polyol (C) followed by depolymerizing and esterifying the polyester resin (A); and the second step of performing polycondensation of a reactant produced by the first step to form the regenerated polyester resin. In the following, a polyester resin (A) collected for recycling is described merely as "polyester resin (A)" in some cases.

### [Polyester resin (A) collected for recycling]

The polyester resin (A) is collected from a polyester resin after use and/or an unadopted polyester resin generated in the production process of polyester products. The polyester resin (A) is a polymer formed from at least one selected from polycarboxylic acids and ester-forming derivatives thereof and at least one selected from polyols and ester-forming derivatives thereof.

A content of the primary polycarboxylic acid component forming the polyester resin (A) is preferably more than 50 mol%, more preferably 70 mol% or more, further preferably 80 mol% or more, and particularly preferably 90 mol% or more in 100 mol% of a total polycarboxylic acid component. The primary polycarboxylic acid component forming the polyester resin (A) is a polycarboxylic acid component that is contained in the polyester resin (A) at the highest molar ratio, and the primary polycarboxylic acid component forming the polyester resin (A) is preferably a dicarboxylic acid or ester-forming derivative thereof.

Examples of the dicarboxylic acid include saturated aliphatic dicarboxylic acids such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, and dimer acid, and ester-forming derivatives thereof; unsaturated aliphatic dicarboxylic acids such as fumaric acid, maleic acid, and itaconic acid, and ester-forming derivatives thereof, and aromatic dicarboxylic acids such as orthophthalic acid, isophthalic acid, terephthalic acid, 5-(alkali metal)sulfoisophthalic acids, diphenic acid, 1,3-naphthalene dicarboxylic acid, 1,4-naphthalene dicarboxylic acid, 1,5-naphthalene dicarboxylic acid, 2,6-naphthalene dicarboxylic acid, 2,7-naphthalene dicarboxylic acid, 4,4'-biphenyldicarboxylic acid, 4,4'-biphenyl sulfone dicarboxylic acid, 4,4'-biphenyl ether dicarboxylic acid, 1,2-bis(phenoxy)ethane-p,p'-dicarboxylic acid, pamoic acid, and anthracene dicarboxylic acid, and ester-forming derivatives thereof; 2,5-furandicarboxylic acid, 2,4-furandicarboxylic acid, and 2,3-furandicarboxylic acid, and ester-forming derivatives thereof.

More preferably, the primary polycarboxylic acid component is terephthalic acid or ester-forming derivative thereof, naphthalenedicarboxylic acid or ester-forming derivative thereof, or furan dicarboxylic acid or ester-forming derivative thereof. In 100 mol% of the total polycarboxylic acid component, a total amount of the terephthalic acid or ester-forming derivative thereof, naphthalenedicarboxylic acid or ester-forming derivative thereof, and furandicarboxylic acid or ester-forming derivative thereof is preferably 70 mol% or more, more preferably 80 mol% or more, further preferably 90 mol% or more, and particularly preferably 95 mol% or more.

An amount of the primary polyol component forming the polyester resin (A) is preferably more than 50 mol%, more preferably 70 mol% or more, further preferably 80 mol% or more, particularly preferably 90 mol% or more, and most preferably 95 mol% or more in 100 mol% of the polyol component. The primary polyol component forming the polyester resin (A) is a polyol component contained in the polyester resin (A) at the highest molar ratio, and the primary polyol component forming the polyester resin (A) is preferably glycol and more preferably ethylene glycol.

Examples of the glycol include; alkylene glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, and 1,12-dodecanediol; aliphatic glycols such as polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols.

Among these glycols, alkylene glycols are preferred, and ethylene glycol, 1,3-propylene glycol, 1,4-butylene glycol, and 1,4-cyclohexanedimethanol are more preferred. Each of the alkylene glycols may have a substituent or alicyclic structure in a molecular chain, and 2 or more of the alkylene glycols may be used at the same time.

The polyester resin (A) preferably has a dicarboxylic acid unit originating from an aromatic dicarboxylic acid and a diol unit originating from an alkylene glycol having 2 to 6 caron atoms. The aromatic dicarboxylic acid preferably includes at least one from terephthalic acid and naphthalenedicarboxylic acid, and the alkylene glycol having 2 to 6 caron atoms includes preferably at least one from ethylene glycol, trimethylene glycol, and tetramethylene glycol, and more preferably ethylene glycol.

The polyester resin (A) preferably has at least one of an ethylene terephthalate unit, an ethylene furanoate unit, and an ethylene naphthalate unit. The polyester resin (A) has the ethylene terephthalate unit, the ethylene furanoate unit, and the ethylene naphthalate unit in a total amount of preferably 50 mol% or more, more preferably 70 mol% or more, further preferably 80 mol% or more, particularly preferably 90 mol% or more, and most preferably 95 mol% or more.

The polyester resin (A) preferably has the ethylene terephthalate unit, preferably in an amount of 50 mol% or more, more preferably 70 mol% or more, further more preferably 80 mol% or more, particularly preferably 90 mol% or more, and most preferably 95 mol% or more.

The polyester resin (A) may have a large amount of ethylene naphthalate unit instead of a large amount of ethylene terephthalate unit, the polyester resin (A) has the ethylene naphthalate unit preferably in an amount of 50 mol% or more, more preferably 70 mol% or more, further more preferably 80 mol% or more, particularly preferably 90 mol% or more, and most preferably 95 mol% or more.

The polyester resin (A) preferably comprises at least one element selected from the group consisting of antimony element, titanium element, and germanium element. In other words, the polyester resin (A) is preferably produced with at least one polymerization catalyst selected from an antimony compound, a titanium compound, and a germanium compound in such an amount appropriate as a catalyst. The content of the polyester resin produced with at least one polymerization catalyst selected from an antimony compound, a titanium compound, and a germanium compound is preferably 50 mol% or more, more preferably 70 mol% or more, and further preferably 80 mol% or more in the polyester resin (A). Recycling of the polyester resin produced with at least one polymerization catalyst selected from an antimony

compound, a titanium compound, and a germanium compound easily results in coloration, however, recycling of the polyester resin by the method according to the present invention decreases coloration of the regenerated polyester resin (D).

In the polyester resin (A), a total content of the antimony element, the titanium element, and the germanium element is, for example, from 2 ppm by mass to 500 ppm by mass, preferably from 5 ppm by mass to 400 ppm by mass, more preferably from 10 ppm by mass to 300 ppm by mass, and further preferably from 50 ppm by mass to 250 ppm by mass. When the total content is more than 500 ppm by mass, coloration of the regenerated polyester resin (D) may not be controlled. Throughout the specification, "ppm by mass" means $10^{-4}$% by mass.

The polyester resin (A) has an intrinsic viscosity (IV) of preferably from 0.5 dl/g to 0.8 dl/g and more preferably from 0.7 dl/g to 0.8 dl/g. The intrinsic viscosity of the polyester resin (A) of less than the range may cause the regenerated polyester resin (D) produced with the polyester resin (A) to have insufficient mechanical strength and impact resistance, and the intrinsic viscosity of the polyester resin (A) of more than the range may cause difficulties in molding process.

[Polycarboxylic acid (B) and polyol (C)]

As the polycarboxylic acid (B) and the polyol (C), above-described components for forming the polyester resin (A) are available. The polycarboxylic acid (B) contains the primary polycarboxylic acid component for forming the polyester resin (A) in an amount of preferably 70 mol% or more, more preferably 80 mol% or more, and further preferably 90 mol% or more. The polyol (C) contains the primary polyol component for forming the polyester resin (A) in an amount of preferably 70 mol% or more, more preferably 80 mol% or more, further preferably 90 mol% or more, and particularly preferably 95 mol% or more.

The primary polycarboxylic acid component forming the polyester resin (A) is preferably dicarboxylic acid, and the polycarboxylic acid (B) preferably contains dicarboxylic acid as a main component. As a polycarboxylic acid other than dicarboxylic acid, a small amount of trivalent or higher polycarboxylic acid and hydroxycarboxylic acid may be used in combination, and a trivalent to tetravalent polycarboxylic acid is preferred. Examples of the polycarboxylic acid include ethane tricarboxylic acid, propane tricarboxylic acid, butane tetracarboxylic acid, pyromellitic acid, trimellitic acid, trimesic acid, 3,4,3',4'-biphenyltetracarboxylic acid, and ester-forming derivatives thereof. In 100 mol% of the total polycarboxylic acid (B) component, the amount of trivalent or higher polycarboxylic acid is preferably 20 mol% or less, more preferably 10 mol% or less, and further preferably 5 mol% or less. When trivalent or higher polycarboxylic acids are used in two or more kinds, the total amount of them is preferably within above range.

Examples of the hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexane carboxylic acid, and ester-forming derivatives thereof. The amount of the hydroxycarboxylic acid is preferably 20 mol% or less, more preferably 10 mol% or less, and further preferably 5 mol% or less in 100 mol% of a total polycarboxylic acid (B) component. When two or more kinds of the hydroxycarboxylic acids are used, a total amount of them is preferably within above range.

Examples of the ester-forming derivatives of the polycarboxylic acid and the hydroxycarboxylic acid include alkyl esters, acid chlorides, and acid anhydrides thereof.

The primary polyol component forming the polyester resin (A) is preferably a glycol, and a primary component forming the polyol (C) is preferably a glycol. As a polyol other than glycol, a small amount of trivalent or higher polyol may be used in combination, and a trivalent to tetravalent polyol is preferred. Examples of the trivalent or higher polyol include trimethylolmethane, trimethylolethane, trimethylolpropane, pentaerythritol, glycerol, and hexanetriol.

In 100 mol% of a total polyol (C) component, an amount of the trivalent or higher polyol is preferably 20 mol% or less, more preferably 10 mol% or less, and further preferably 5 mol% or less. When trivalent or higher polyols are used in two or more kinds, a total amount of them is preferably within above range.

Also, a cyclic ester may be used in combination. Examples of the cyclic ester include ε-caprolactone, β-propiolactone, β-methyl-β-propiolactone, δ-valerolactone, glycolide, and lactide. Examples of the ester-forming derivatives of the polyols include esters of the polyols and lower aliphatic carboxylic acid exemplified by acetate.

The content of the cyclic ester with respect to the total polycarboxylic acid (B) component and the total polyol (C) component is preferably 20 mol% or less, more preferably 10 mol% or less, and further preferably 5 mol% or less. When cyclic esters are used in two or more kinds, a total amount of them is preferably within above range.

[Regenerated polyester resin (D)]

The regenerated polyester resin (D) has an intrinsic viscosity of preferably from 0.50 dl/g to 0.90 dl/g and more preferably from 0.55 dl/g to 0.80 dl/g. When the regenerated polyester resin (D) has an intrinsic viscosity of less than 0.50 dl/g, the regenerated polyester resin (D) may have insufficient mechanical strength and impact resistance. When the regenerated polyester resin (D) has an intrinsic viscosity of more than 0.90 dl/g, the economic efficiency may be

decreased.

The regenerated polyester resin (D) has a reduced viscosity of preferably from 0.50 dl/g to 0.90 dl/g and more preferably from 0.55 dl/g to 0.80 dl/g. When the regenerated polyester resin (D) has a reduced viscosity of less than 0.50 dl/g, the regenerated polyester resin (D) may have insufficient mechanical strength and impact resistance. When the regenerated polyester resin (D) has a reduced viscosity of more than 0.90 dl/g, the economic efficiency may be decreased.

The content of the polyester resin (A) used in the production of the regenerated polyester resin by the method according to the present invention is from 5 parts by mass to 80 parts by mass, preferably from 7 parts by mass to 70 parts by mass, and more preferably from 8 parts by mass to 65 parts by mass with respect to 100 parts by mass of the regenerated polyester resin (D). By adjusting the content of the polyester resin (A) within above range, coloration and a decrease in molecular weight of the regenerated polyester resin (D) can be reduced. The blending content of the polyester resin (A) of more than 80 parts by mass causes insufficient progression of the esterification reaction when the polyester resin (A), the polycarboxylic acid (B), and the polyol (C) are mixed, resulting in incompatibility. When the blending content of the polyester resin (A) is less than 5 parts by mass, the inhibitory effect of coloration may be saturated in addition to decreased economic efficiency.

The regenerated polyester resin (D) has an acid value of 100 eq/ton or less, preferably 70 eq/ton or less, and more preferably from 3 eq/ton to 60 eq/ton.

The regenerated polyester resin (D) is obtained by performing polycondensation of a reactant produced by the first step, and the polycondensation in the second step is performed in the presence of an aluminum compound as a polymerization catalyst. In other words, the regenerated polyester resin (D) is produced with a polymerization catalyst containing an aluminum compound with an amount sufficient as a polymerization catalyst. The regenerated polyester resin (D) is produced preferably by performing the polycondensation in the presence of an aluminum compound and a phosphorus compound, and preferably produced with a polymerization catalyst containing an aluminum compound and a phosphorus compound.

<Aluminum compound>

The aluminum compound used in the polymerization catalyst for producing the regenerated polyester resin (D) is not particularly limited provided that the aluminum compound is soluble in a solvent, and a known aluminum compound can be used without limitation. Examples of the aluminum compound include; carboxylates such as aluminum formate, aluminum acetate, basic aluminum acetate, aluminum propionate, aluminum oxalate, aluminum acrylate, aluminum laurate, aluminum stearate, aluminum benzoate, aluminum trichloroacetate, aluminum lactate, aluminum citrate, aluminum tartrate, and aluminum salicylate; inorganic acid salts such as aluminum chloride, aluminum hydroxide, aluminum hydroxychloride, aluminum nitrate, aluminum sulfate, aluminum carbonate, aluminum phosphate, and aluminum phosphonate; aluminum alkoxides such as aluminum methoxide, aluminum ethoxide, aluminum n-propoxide, aluminum isopropoxide, aluminum n-butoxide, and aluminum t-butoxide; chelate compounds such as aluminum acetylacetonate, aluminum ethylacetoacetate, and aluminum ethylacetoacetate di-iso-propoxide; and organic aluminum compounds such as trimethylaluminum and triethylaluminum, and partially hydrolyzed products thereof, reaction products composed of aluminum alkoxides or aluminum chelate compounds and hydroxycarboxylic acids, composite oxides of aluminum such as aluminum oxide, ultrafine particle aluminum oxide, aluminum silicate, and those containing aluminum and titanium, silicon, zirconium, alkali metals, alkaline earth metals, or the like; etc. Among them, at least one selected from carboxylates, inorganic acid salts, and chelate compounds is preferred, at least one selected from aluminum acetate, basic aluminum acetate, aluminum chloride, aluminum hydroxide, aluminum hydroxychloride, and aluminum acetylacetonate is more preferred, at least one selected from aluminum acetate, basic aluminum acetate, aluminum chloride, aluminum hydroxide, aluminum hydroxychloride, and aluminum acetylacetonate is further preferred, at least one selected from aluminum acetate and basic aluminum acetate is particularly preferred, and basic aluminum acetate is most preferred.

The aluminum compound is preferably an aluminum compound soluble in solvents such as water and glycol. Examples of the solvents available in the production of the regenerated polyester resin (D) include water and alkylene glycols. Examples of the alkylene glycol include ethylene glycol, diethylene glycol, triethylene glycol, propylene glycol, dipropylene glycol, tripropylene glycol, trimethylene glycol, ditrimethylene glycol, tetramethylene glycol, ditetramethylene glycol, and neopentyl glycol. Preferred is at least one selected from water, ethylene glycol, trimethylene glycol, and tetramethylene glycol, and water or ethylene glycol is further preferred.

The content of the aluminum element in the regenerated polyester resin (D) is from 5 ppm by mass to 100 ppm by mass, preferably from 7 ppm by mass to 60 ppm by mass, more preferably from 10 ppm by mass to 50 ppm by mass, and further preferably from 12 ppm by mass to 40 ppm by mass. The aluminum element with the content of less than 5 ppm by mass may cause insufficient polymerization activity, and the aluminum element with the content of more than 100 ppm by mass may cause an increase in the amount of the aluminum-based foreign matter.

<Phosphorus compound>

The phosphorus compound used in the polymerization catalyst for producing the regenerated polyester resin (D) is not particularly limited, and a phosphonic acid-based compound and a phosphinic acid-based compound are preferred due to their remarkable abilities to enhance catalytic activity. Among them, a phosphonic acid-based compound is more preferred due to especially remarkable ability to enhance catalytic activity.

Among the phosphorus compounds, preferred is a phosphorus compound having phosphorus element and phenolic structure in the same molecule. Though any phosphorus compound having phosphorus element and phenolic structure in the same molecule can be employed, the use of one or two or more compounds selected from the group consisting of phosphonic acid-based compounds having phosphorus element and phenolic structure in the same molecule and phosphinic acid-based compounds having phosphorus element and phenolic structure in the same molecule are preferred due to remarkable ability to enhance catalytic activity, and the use of one or two or more of the phosphonic acid-based compounds having phosphorus element and phenolic structure in the same molecule is more preferred due to especially remarkable ability to enhance catalytic activity.

The phosphorus compound having phosphorus element and phenolic structure in the same molecule is exemplified by compounds represented by $P(=O)R^1(OR^2)(OR^3)$ and $P(=O)R^1R^4(OR^2)$. $R^1$ represents a hydrocarbon group with from 1 to 50 carbon atoms and having a phenol moiety, or a hydrocarbon group with 1 to 50 carbon atoms and having a substituent such as a hydroxy group, a halogen group, an alkoxy group, and an amino group, in addition to phenolic structure. $R^4$ represents a hydrogen atom, a hydrocarbon group with 1 to 50 carbon atoms, or a hydrocarbon group with 1 to 50 carbon atoms and having a substituent such as a hydroxy group, a halogen group, an alkoxy group, and an amino group. $R^2$ and $R^3$ each independently represents a hydrogen atom, a hydrocarbon group with 1 to 50 carbon atoms, or a hydrocarbon group with 1 to 50 carbon atoms and having a substituent such as a hydroxy group and an alkoxy group. The hydrocarbon group may have branching structure, alicyclic structure such as a cyclohexyl group, and aromatic ring structure such as a phenyl group and a naphthyl group. The terminals of $R^2$ and $R^4$ may be bonded to each other.

Examples of the phosphorus compound having phosphorus element and phenolic structure in the same molecule include p-hydroxyphenylphosphonic acid, dimethyl p-hydroxyphenyl phosphonate, diethyl p-hydroxyphenyl phosphonate, diphenyl p-hydroxyphenyl phosphonate, bis(p-hydroxyphenyl)phosphinic acid, methyl bis(p-hydroxyphenyl)phosphinate, phenyl bis(p-hydroxyphenyl)phosphinate, p-hydroxyphenyl phosphinic acid, methyl p-hydroxyphenyl phosphinate, and phenyl p-hydroxyphenyl phosphinate.

In addition to the compound described above, the phosphorus compound having phosphorus element and phenolic structure in the same molecule is exemplified by a phosphorus compound having phosphorus element and hindered phenol structure in the same molecule (phenol structure in which at least one alkyl group having a tertiary carbon (preferably alkyl groups having a tertiary carbon in a benzyl position, such as t-butyl group and thexyl group; for example, neopentyl group) is bonded in one or two ortho-positions to a hydroxy group). Preferred is a phosphorus compound having phosphorus element and the following structure represented by Chemical Formula A in the same molecule, and the following dialkyl 3,5-di-tert-butyl-4-hydroxybenzyl phosphonate represented by Chemical Formula B is more preferred among them. As a phosphorus compound used in the production of the regenerated polyester resin (D), the following dialkyl 3,5-di-tert-butyl-4-hydroxybenzyl phosphonate represented by Chemical Formula B is preferred, further, a modified product of dialkyl 3,5-di-tert-butyl-4-hydroxybenzyl phosphonate may also be included in the phosphorus compound. Details of the modified product will be described later.

[Chemical Formula 1]

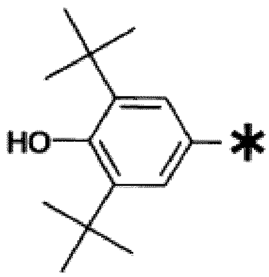

(Chemical Formula A)

(In Chemical Formula A, * represents a point of attachment.)

[Chemical Formula 2]

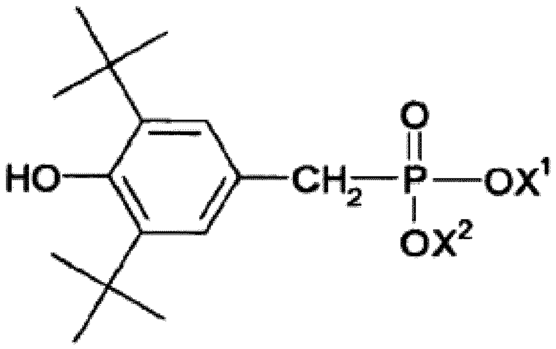

(Chemical Formula B)

(In Chemical Formula B, $X^1$ and $X^2$ each represents a hydrogen atom, or an alkyl group with 1 to 4 carbon atoms.)

In the specification, a polyester resin is determined to have "hindered phenol structure" when at least one type of the hindered phenol structure is detected through P-NMR measurement of a solution obtained by dissolving the polyester resin in hexafluoroisopropanol-based solvent. In other words, the regenerated polyester resin (D) is preferably a polyester resin produced with a polymerization catalyst containing a phosphorus compound having phosphorus element and hindered phenol structure in the same molecule. The method (measurement by P-NMR) for detecting hindered phenol structure in the regenerated polyester resin (D) will be described later.

In Chemical Formula B, each of $X^1$ and $X^2$ preferably represents an alkyl group with 1 to 4 carbon atoms, and more preferably an alkyl group with 1 to 2 carbon atoms. Particularly, commercially available Irganox1222 (manufactured by BASF), which is an ethyl ester compound with 2 carbons, is preferred due to easy availability.

The phosphorus compound is preferably heat treated in a solvent before use. Details of the heat treatment will be described later. In case where dialkyl 3,5-di-tert-butyl-4-hydroxybenzyl phosphonate, the phosphorus compound represented by Chemical Formula B, is used as the phosphorus compound, dialkyl 3,5-di-tert-butyl-4-hydroxybenzyl phosphonate undergoes a partial structural change during the heat treatment. For example, a t-butyl group is detached, an ethyl ester group is hydrolyzed, and the structure changes to hydroxyethyl ester exchange structure (ester exchange structure with ethylene glycol). Accordingly, in the present invention, the phosphorus compounds include dialkyl 3,5-di-tert-butyl-4-hydroxybenzyl phosphonate represented by Chemical Formula B as well as structurally modified products of dialkyl 3,5-di-tert-butyl-4-hydroxybenzyl phosphonate. The detachment of t-butyl group occurs significantly under high temperature environment in the polymerization step.

In case where diethyl 3,5-di-tert-butyl-4-hydroxybenzyl phosphonate is used as the phosphorus compound, the followings are 9 phosphorus compounds obtained through partial structural changes of diethyl 3,5-di-tert-butyl-4-hydroxybenzyl phosphonate. The amount of component of the phosphorus compound as a result of the structural changes in a glycol solution can be quantified through measurement by P-NMR.

[Chemical Formula 3]

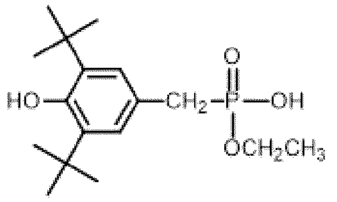 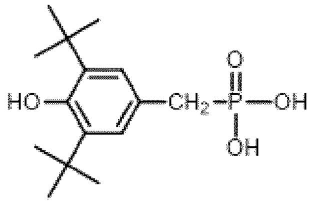 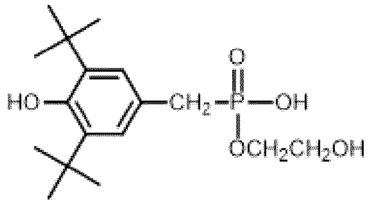

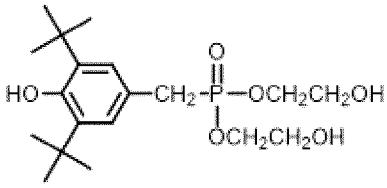 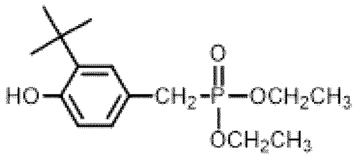 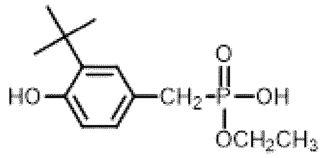

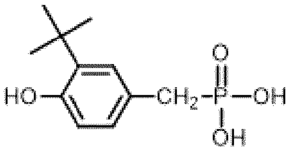 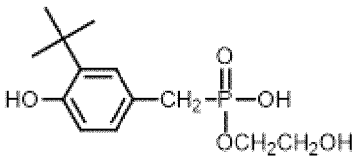 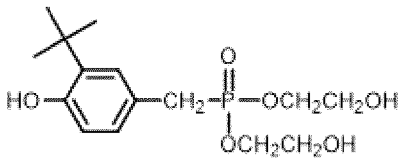

Accordingly, the phosphorus compounds of the present invention may include the modified products of dialkyl 3,5-di-tert-butyl-4-hydroxybenzyl phosphonate represented by above 9 chemical formulae as well as dialkyl 3,5-di-tert-butyl-4-hydroxybenzyl phosphonate.

In case where above Irganox1222 is used as the phosphorus compound, the following 9 types of phosphorus compound residues are contained in the polyester resin. When at least one of the 9 types of hindered phenol structure shown in Table 1 is detected through measurement by P-NMR, the regenerated polyester resin (D) is determined to be a polyester resin produced with a polymerization catalyst containing a phosphorus compound having phosphorus element and hindered phenol structure in the same molecule. The phosphorus compound having hindered phenol structure allows the polymerization catalyst to work with sufficient polymerization activity, enabling decreased catalyst cost.

[Table 1]

| Structure from phosphorus compound / Phenolic structure | 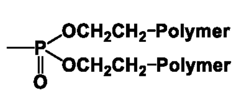 | 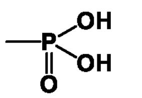 | 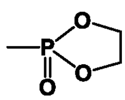 |
|---|---|---|---|
| 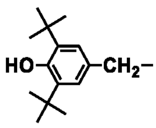 | (Chemical Formula 1) | (Chemical Formula 4) | (Chemical Formula 7) |
| 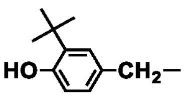 | (Chemical Formula 2) | (Chemical Formula 5) | (Chemical Formula 8) |
| 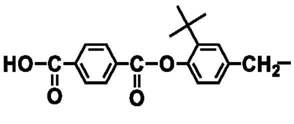 | (Chemical Formula 3) | (Chemical Formula 6) | (Chemical Formula 9) |

In the present invention, at least one type of above structure represented by Chemical Formulae 1, 4, and 7 is

preferably conitaned.

The content of the phosphorus element in the regenerated polyester resin (D) is preferably from 3 ppm by mass to 1000 ppm by mass, more preferably from 5 ppm by mass to 500 ppm by mass, further preferably from 10 ppm by mass to 200 ppm by mass, particularly preferably from 12 ppm by mass to 100 ppm by mass, and most preferably from 30 ppm by mass to 80 ppm by mass. The content of the phosphorus element of less than 3 ppm by mass may lead to reduced polymerization activity and increased amount of aluminum-based foreign matter. The content of the phosphorus element of more than 1000 ppm by mass may cause reduced polymerization activity on the contrary, and increased catalyst cost due to large amount of the phosphorus compound added.

In the regenerated polyester resin (D), the mole ratio of the phosphorus element with respect to the aluminum element (hereinafter, referred to as "the residual mole ratio of the phosphorus element with respect to the aluminum element") is preferably from 0.60 to 5.00, more preferably from 0.75 to 4.00, further preferably from 0.80 to 3.50, and particularly preferably from 0.90 to 3.00. As described above, the aluminum element and the phosphorus element in the regenerated polyester resin (D) originate from the aluminum compound and the phosphorus compound contained in the polymerization catalysts for producing the regenerated polyester resin (D), respectively. The use of the aluminum compound and the phosphorus compound at a specific ratio enables the functional formation of a complex having catalytic activity in a polymerization system, and sufficient polymerization activity will be exhibited. The catalyst (production) cost in the production of the polyester resin produced with a polymerization catalyst containing an aluminum compound and a phosphorus compound is higher than the catalyst cost in the production of a polyester resin produced with an antimony catalyst, however, the concurrent use of the aluminum compound and the phosphorus compound at a specific ratio can reduce the catalyst cost and achieve sufficient polymerization activity, further, the coloration of the regenerated polyester resin (D) can be reduced. The residual mole ratio of the phosphorus element with respect to the aluminum element of less than 0.60 may cause decreases in thermal stability and thermal oxidation stability and an increase in the amount of aluminum-based foreign matter. The residual mole ratio of the phosphorus element with respect to the aluminum element of more than 5.00 means that the amount of addition of the phosphorus compound is too high, leading to increased catalyst cost.

In addition to the aluminum compound and the phosphorus compound, as a polymerization catalyst (a polymerization catalyst added to the reactant or intermediate) in the production of the regenerated polyester resin (D), other polymerization catalysts such as an antimony compound, a germanium compound, and a titanium compound may be used in combination, to the extent that problems relating characteristics, the processability, and the color tone of the regenerated polyester resin (D) are not caused. The amount of addition of each of the antimony element, the germanium element, and the titanium element to the reactant or intermediate is preferably 3 ppm by mass or less. These other polymerization catalysts should be used in the smallest amount possible.

[Method for producing regenerated polyester resin (D)]

Hereinafter, the method for producing the regenerated polyester resin (D) will be described. As described above, the method for producing the regenerated polyester resin (D) of the present invention comprises the first step of mixing the polyester resin (A) collected for recycling, the polycarboxylic acid (B), and the polyol (C) followed by depolymerizing and esterifying the polyester resin (A); and the second step of performing polycondensation of a reactant produced by the first step to form the regenerated polyester resin. The amount of the reactant produced by the first step (low condensate) is a total amount of the polyester resin (A), the polycarboxylic acid (B), and the polyol (C), and the reactant produced by the first step may be described as "intermediate". The following (1) should be satisfied, at least one of the following (2) and (3) are preferably satisfied in addition to the following (1), and all of the following (1) to (3) are more preferably satisfied.

(1) The aluminum compound content in the regenerated polyester resin (D) is from 5 ppm by mass to 100 ppm by mass on an aluminum element basis.
(2) The phosphorus compound content in the regenerated polyester resin (D) is from 3 ppm by mass to 1000 ppm by mass on a phosphorus element basis.
(3) The residual mole ratio of the phosphorus element with respect to the aluminum element in the regenerated polyester resin (D) is 0.60 or more and 5.00 or less.

In the first step, by mixing the polyester resin (A) collected for recycling (A), the polycarboxylic acid (B), and the polyol (C) and charging the polyester resin (A), the polycarboxylic acid (B), and the polyol (C) in the same chamber, the intermediate is formed by esterification from the depolymerized polyester and an oligomer thereof, the polycarboxylic acid (B), and the polyol (C) while the depolymerization of the polyester resin (A) is performed. The first step is preferably performed under a pressurized condition to conduct the depolymerization, and the pressure is preferably from 0.1 MPa to 0.4 MPa. Furthermore, the first step is preferably conducted at a temperature of from 200°C to 270°C. The amount

(mass) of the regenerated polyester resin (D) produced can be calculated from the mass of the polyester resin (A), the polycarboxylic acid (B), and the polyol (C).

In order to perform the polycondensation in the presence of the aluminum compound in the second step, a solution "S" obtained by dissolving the aluminum compound is preferably added to the intermediate after the completion of the first step and before the start of the second step. In case where the polycondensation is performed in the presence of the aluminum compound and the phosphorus compound in the second step, the solution "S" obtained by dissolving the aluminum compound and a solution "T" obtained by dissolving the phosphorus compound are added to the intermediate after the completion of the first step and before the start of the second step. The polycarboxylic acid and ester-forming derivative thereof, the hydroxy carboxylic acid and ester-forming derivative thereof that may be added in a small amount, and a cyclic ester that may be added in a small amount are not distilled off from the reaction system during polymerization, and almost 100% of the amount of use initially added as catalysts to the system remains in the regenerated polyester resin (D) produced through polymerization. From the amount of addition of them, the mass of "the regenerated polyester resin (D) produced" can be calculated.

When the aluminum compound and the phosphorus compound are used as catalysts, these compounds are added preferably in a slurry or a solution, more preferably in a solution prepared by dissolving the compound in a solvent such as water or glycol, further preferably in a solution prepared by dissolving the compound in solvents such as water and/or glycol, and most preferably in a solution prepared by dissolving the compound in ethylene glycol.

The solution "S" obtained by dissolving the aluminum compound and the solution "T" obtained by dissolving the phosphorus compound are preferably added in any step prior to the start of the polymerization reaction in the production process of the regenerated polyester resin (D), so that the contents (residual amounts) of the aluminum compound and the phosphorus compound in the regenerated polyester resin (D) can satisfy the range of above (1) to (3).

By adding the solution "S" obtained by dissolving the aluminum compound and the solution "T" obtained by dissolving the phosphorus compound so that the contents (residual amounts) of the aluminum compound and the phosphorus compound in the regenerated polyester resin (D) can satisfy the range of above (1) to (3), a complex having a catalytic activity in a polymerization system can be functionally formed, resulting in sufficient polymerization activity. In addition, the generation of the aluminum-based foreign matter can be reduced.

The aluminum atom in the aluminum compound that works as a catalyst remains in the regenerated polyester resin (D) produced by polymerization at 100% of the amount of use initially added to the system as a catalyst, despite the environment under reduced pressure during polymerization of the polyester resin. In short, the amount of the aluminum compound is almost unchanged before and after the polymerization; therefore, when the amount of addition of the aluminum element is adjusted to from 5 ppm by mass to 100 ppm by mass to the intermediate, the aluminum element content in the regenerated polyester resin (D) results in from 5 ppm by mass to 100 ppm by mass. The amount of addition of the aluminum element to the intermediate may be from 5 ppm by mass to 100 ppm by mass, preferably from 7 ppm by mass to 60 ppm by mass, more preferably from 10 ppm by mass to 50 ppm by mass, and further preferably from 12 ppm by mass to 40 ppm by mass.

When the phosphorus compound that works as a catalyst together with the aluminum compound is placed under the reduced pressure environment during the polymerization of the polyester resin, a part of the amount of use of the phosphorus compound initially added to the system as a catalyst (approximately from 10% to 40%) is removed from the system, and the percentage of the phosphorus compound removed from the system changes depending on the addition mole ratio of the phosphorus element with respect to the aluminum element, the basicity or the acidity of the solution obtained by dissolving the aluminum compound and the solution obtained by dissolving the phosphorus compound, and the method for adding the aluminum compound-containing solution and the phosphorus compound-containing solution (whether the solutions are added as one solution or added separately). Accordingly, the amount of addition of the phosphorus element is preferably from 5 ppm by mass to 1500 ppm by mass. By adjusting the amount of addition of the phosphorus element to above range, the content of the phosphorus element in the regenerated polyester resin (D) can be adjusted to from 3 ppm by mass to 1000 ppm by mass. The amount of addition of the phosphorus element with respect to the reactant from the first step is more preferably from 10 ppm by mass to 500 ppm by mass, further preferably from 20 ppm by mass to 200 ppm by mass, and particularly preferably from 30 ppm by mass to 150 ppm by mass. The mole ratio of the amount of addition of the phosphorus element to the amount of addition of the aluminum element is preferably from 1.00 to 7.00, more preferably from 1.50 to 6.00, and further preferably from 2.00 to 5.00.

In a preferred embodiment, the solution "S" obtained by dissolving the aluminum compound and the solution "T" obtained by dissolving the phosphorus compound are added at the same time, and in a more preferred embodiment, a mixed solution is prepared by mixing the solution "S" obtained by dissolving the aluminum compound and the solution "T" obtained by dissolving the phosphorus compound at an appropriately predetermined ratio to the intermediate in advance, and one solution obtained by mixing the solutions is added to the intermediate. The methods for preparing the one solution in advance include a method in which the solutions are mixed in a tank, and also a method in which pipelines for the addition of the catalysts are joined in the middle of pipelines for the solvents so that the solutions can be mixed.

In the case of the addition to a reaction chamber, stirring is performed preferably at a higher speed in the reaction chamber. In the case of the addition to pipelines installed between reaction chambers, an in-line mixer may be installed so that the catalyst solutions added can be mixed quickly and uniformly.

Separate addition of the solution "S" obtained by dissolving the aluminum compound and the solution "T" obtained by dissolving the phosphorus compound may cause the generation of a foreign matter that originates from the aluminum compound, a decrease in crystallization temperature during heating, an increase in crystallization temperature during cooling, and insufficient catalyst activity. By adding the aluminum compound and the phosphorus compound at the same time, a complex having polymerization activity can be formed from the aluminum compound and the phosphorus compound promptly and effectively, however, in the case of separate addition, a complex cannot be formed from the aluminum compound and the phosphorus compound sufficiently, and the aluminum compound that failed to form the complex with the phosphorus compound may precipitate as a foreign matter.

The solution "S" obtained by dissolving the aluminum compound and the solution "T" obtained by dissolving the phosphorus compound are preferably added to the intermediate after the first step and before the second step in order to reduce the aluminum-based foreign matter. The solution "S" obtained by dissolving the aluminum compound is preferably a glycol solution obtained by dissolving the aluminum compound and the solution "T" obtained by dissolving the phosphorus compound is preferably a glycol solution obtained by dissolving the phosphorus compound.

<Heat treatment of phosphorus compound>

The phosphorus compound used in the production of the regenerated polyester resin (D) is preferably a phosphorus compound subjected to a heat treatment in a solvent. The solvent for the heat treatment is not particularly limited provided that the solvent is at least one selected from the group consisting of water and alkylene glycols, the alkylene glycol is preferably a solvent that can solve the phosphorus compound, and more preferably glycols such as ethylene glycol that is a constituent component of the polyester resin (B). The heat treatment in a solvent is preferably performed with a solution in which the phosphorus compound is completely dissolved, however, the phosphorus compound may not be completely dissolved.

With regard to the conditions for the heat treatment, the heat treatment temperature is preferably from 170°C to 196°C, more preferably from 175°C to 185°C, and further preferably from 175°C to 180°C. The heat treatment time is preferably from 30 minutes to 240 minutes and more preferably from 50 minutes to 210 minutes.

The concentration of the phosphorus compound in the heat treatment is preferably from 3% by mass to 10% by mass.

By performing the heat treatment, the acidity of the phosphorus compound in a glycol solution can be kept constant, thus the polymerization activity in the use of the phosphorus compound in combination with the aluminum compound is enhanced, the aluminum-based foreign matter originating from the polymerization catalyst can be decreased, and the amount of the phosphorus compound distilled off in the polymerization process is reduced, enhancing economic efficiency. Therefore, the heat treatment is preferably performed.

The present application claims benefit of priority to Japanese Patent Application No. 2021-161890 filed on September 30, 2021. The entire contents of the specification of Japanese Patent Application No. 2021-161890 filed on September 30, 2021, are incorporated herein by reference.

EXAMPLES

Hereinafter, the present invention will be described with Examples, however, the scope of the present invention is not limited by Examples. The followings are methods employed for evaluation in each of Examples and Comparative Examples.

<Evaluation methods>

(1) Compositional analysis of recycled polyester resin (a)

In 0.6 ml of a mixed solvent of deuterated hexafluoroisopropanol and deuterated chloroform (1:9, volume ratio), 20 mg of a recycled polyester resin (a) described below was dissolved, and the resulting solution was centrifuged to obtain a supernatant. After the centrifugation, the supernatant was collected, and 35 pL of a mixed solvent of triethylamine and deuterated chloroform to give a triethylamine concentration of 0.2 mol/L was added to the supernatant. Then, H-NMR measurement was performed under the following conditions.

Apparatus: Fourier transform nuclear magnetic resonance device (AVANCE NEO 600, manufactured by BRUKER)
$^{1}$H resonance frequency: 600.13 MHz

Locking solvent: deuterated chloroform
Flip angle: 30°
Incorporation time of data: 4 seconds
Retardation time: 1 second
Measurement temperature: 30°C
Cumulative number: 128 times

(2) Content of prescribed metal element in sample

The recycled polyester resin (a) was weighed in a platinum crucible, then carbonized on an electric stove, and incinerated in a muffle furnace under the conditions of 550°C and 8 hours. The incinerated sample was dissolved in 1.2 M hydrochloric acid to give a sample solution. The sample solution was then subjected to measurement by high-frequency inductively coupled plasma emission spectrometry under the following conditions, and contents of the antimony element, the germanium element, and the titanium element in the recycled polyester resin (a) were determined. Similarly, contents of the antimony element, the germanium element, and the titanium element in regenerated polyester resins (d-1) to (d-6) obtained in each of Examples and Comparative Examples and in polyester resins (d'-1) to (d'-2) obtained in each of Reference Examples, as described later, were determined, and the results are shown in Table 2. The element with the content of less than 1 ppm by mass is omitted in the Table 2.

Apparatus : CIROS-120, manufactured by SPECTRO
Plasma output: 1400 W
Plasma gas: 13.0 L/min
Auxiliary gas: 2.0 L/min
Nebulizer: cross flow nebulizer
Chamber: cyclone chamber
Measurement wavelength: 167.078 nm

(3) Content of phosphorus element in sample

The regenerated polyester resins (d) obtained in each of Examples and Comparative Examples and the polyester resins (d') obtained in each of Reference Examples were used as samples, and the samples were wet-decomposed with sulfuric acid, nitric acid, and perchloric acid, followed by neutralization by aqueous ammonia. To the solution prepared, ammonium molybdate and hydrazine sulfate were added, and the resulting solution was subjected to the measurement of absorbance at a wavelength of 830 nm with an ultraviolet-visible spectrophotometer (UV-1700, manufactured by SHIMADZU CORPORATION). The phosphorus element content in the sample was determined with a calibration curve prepared in advance. In the following measurement method, the term "sample" indicates one of the regenerated polyester resins (d-1) to (d-7) obtained in each of Examples and Comparative Examples and the polyester resins (d'-1) to (d'-2) obtained in each of Reference Examples.

(4) Intrinsic viscosity (IV) and reduced viscosity

Approximately 3 g of the sample or a preform thereof was frozen and ground, followed by drying at 140°C for 15 minutes. Subsequently, 0.20 g of the dried sample was weighed and completely dissolved in 20 ml of a mixed solvent of 1,1,2,2-tetrachloroethane and p-chlorophenol (1:3, mass ratio) at 100°C for 60 minutes with stirring. The solution thus obtained was cooled to room temperature and filtrated through a glass filter to give a solution. Then, with an Ubbelohde viscometer (manufactured by RIGO Co., Ltd.) set at a temperature of 30°C, elution time of the resulting solution and the solvent was measured to determine the intrinsic viscosity and the reduced viscosity. The intrinsic viscosity can be calculated according to the following equation:

$$[\eta] = (-1 + \sqrt{(1 + 4K'\eta Sp)}) / 2K'C$$

$$\eta Sp = (\tau - \tau 0)\ \tau 0$$

where symbols in the equation indicate the following meanings:

[η]: intrinsic viscosity (dl/g)

ηSp: specific viscosity (-)
K': the Huggins constant (= 0.33)
C: concentration (= 1 g/dl)
τ: elution time of sample (sec)
τ0: elution time of solvent (sec)

(5) Acid value

In 0.6 ml of a mixed solvent of deuterated hexafluoroisopropanol and deuterated chloroform (1:9, volume ratio), 20 mg of the recycled polyester resin (a) described below or the sample was dissolved, and the resulting solution was centrifuged to obtain a supernatant. After the centrifugation, the supernatant was collected, and 35 pL of a mixed solvent of triethylamine and deuterated chloroform to give a triethylamine concentration of 0.2 mol/L, was added to the supernatant. Then, H-NMR measurement was performed under the following conditions.

Apparatus: Fourier transform nuclear magnetic resonance device (AVANCE NEO 600, manufactured by BRUKER)
$^1$H resonance frequency: 600.13 MHz
Locking solvent: deuterated chloroform
Flip angle: 30°
Incorporation time of data: 4 seconds
Retardation time: 1 second
Measurement temperature: 30°C
Cumulative number: 128 times

(6) Glass transition temperature

In an aluminum sample pan, 5 mg of the recycled polyester resin (a) described later or the sample was placed and the aluminum sample pan was tightly closed with a lid. Subsequently, the aluminum sample pan containing the polyester resin or the sample was set to a differential scanning calorimeter (model: DSC 220, manufactured by Seiko Instruments Inc.), held at 250°C for 5 minutes, rapidly cooled with liquid nitrogen, and measurement was performed by the heat of from -100°C to 250°C at a increasing rate of 20°C/min. As shown in the obtained DSC curve in Figure 1, the intersection (marked with a circle in the figure) of the tangent line (1) obtained from the baseline before the appearance of the inflection point and the tangent line (2) obtained from the baseline after the appearance of the inflection point was determined as a glass transition temperature.

(7) Measurement of color

A measurement cell was filled with a sample of amorphous polyester pellets (approximately 50 g), and measurement was performed while rotating the measurement cell.
Apparatus: precision-type spectrophotometric colorimeter (type: TC-1500SX, manufactured by Tokyo Denshoku CO., LTD.)
Measurement method: a method according to JIS Z8722, transmitted light 0°, -0° method

Detecting element: silicon photodiode array
Light source: halogen lamp, 12 V, 100 W, 2000 H
Measuring area: transmittance, 25 mmφ
Temperature and humidity conditions: 25°C, RH50%
Measurement cell: φ35 mm, height 25 mm, rotating type (pellet)
Details of measurement: tristimulus values XYZ, CIE chromaticity coordinate, x=X/X+Y+Z, y=Y/X+Y+Z
Hunter Lab color system

Hereinafter, preparations of an aluminum compound-containing ethylene glycol solution and a phosphorus compound-containing ethylene glycol solution will be described.

<Preparation of aluminum compound-containing ethylene glycol solution "S">

In a preparation tank, to an aqueous solution of basic aluminum acetate having a concentration of 20 g/L, ethylene glycol in equivalent volume (volume ratio) to the aqueous solution was charged, and the mixture was stirred at room temperature (23°C) for several hours. Then, water was distilled off from the reaction system at a temperature

of from 50°C to 90°C with stirring for several hours under reduced pressure (3 kPa), and an aluminum compound-containing ethylene glycol solution "S" with an aluminum compound at a concentration of 20 g/L was prepared.

<Preparation of phosphorus compound-containing ethylene glycol solution "T">

Irganox1222 (manufactured by BASF) as a phosphorus compound was charged in a preparation tank along with ethylene glycol, and the mixture was heated at 175°C for 150 minutes under nitrogen substituted atmosphere with stirring, to prepare a phosphorus compound-containing ethylene glycol solution "T" containing a phosphorus compound at a concentration of 50 g/L.

<Collected polyester resin (a)>

As a collected polyester resin (a) (hereinafter, referred to as "recycled polyester resin (a)"), flakes of collected polyester resin (provided by Kyoei Sangyo Co.,Ltd) were used. As a result of the compositional analysis, it was confirmed that the polycarboxylic acid component comprised 98 mol% of terephthalic acid and 2 mol% of isophthalic acid and the polyol component comprised 98 mol% of ethylene glycol and 2 mol% of diethylene glycol in the flakes of the collected polyester resin. The flakes of the collected polyester resin had an intrinsic viscosity of 0.750 dl/g and a glass transition temperature of 76°C. In the flakes of the collected polyester resin, the content of the antimony element was 200 ppm by mass, and both of the germanium element content and the titanium element content were less than 1 ppm by mass. Based on contents of the antimony element, the germanium element, and the titanium element, it was confirmed that the flakes of the collected polyester resin were flakes of collected polyester resin made primarily from hollow molded bodies produced from a polyester resin prepared with an antimony catalyst.

< Collected polyester resin (b)>

As a collected polyester resin (b) (hereinafter, referred to as "recycled polyester resin (b)"), pellets of collected polyester resin in which waste films generated in polyethylene naphthalate film production were collected and pelletized again were used. As a result of the compositional analysis, it was confirmed that the polycarboxylic acid component comprised 100 mol% of naphthalenedicarboxylic acid and the polyol component comprised 98 mol% of ethylene glycol and 2 mol% of diethylene glycol in the pellets of the collected polyester resin. The pellets of collected polyester resin had an intrinsic viscosity of 0.520 dl/g and a glass transition temperature of 118°C. In the pellets of the collected polyester resin, the antimony element content was 200 ppm by mass, and both of the germanium element content and the titanium element content were less than 1 ppm by mass.

(Example 1)

In a 2 L stainless steel autoclave quipped with a stirrer, 375.5 g of high-purity terephthalic acid, 333.0 g of ethylene glycol, and 39.8 g of the recycled polyester resin (a) were charged at one time, and heated up to 260°C under a pressure of 0.25 MPa to obtain a polyester oligomer with an esterification rate of 90%. The oligomer thus obtained was transparent and had an acid value of 705 eq/ton and a hydroxyl value of 1860 eq/ton.

To the oligomer thus obtained, one solution obtained by mixing the aluminum compound-containing ethylene glycol solution "S" and the phosphorus compound-containing ethylene glycol solution "T" prepared in the above-described manner was added. The one solution as a mixed solution was prepared so that the aluminum compound content on an aluminum element basis and the phosphorus compound content on a phosphorus element basis would become 14 ppm by mass and 30 ppm by mass, respectively, to the mass of the oligomer. The addition mole ratio of the phosphorus element with respect to the aluminum element was 1.87. The amount of the regenerated polyester resin (d-1) produced can be calculated from the amount of the addition of terephthalic acid and the amount of PET resin. In Example 1, the one solution as a mixed solution was added so that the aluminum compound content on an aluminum element basis and the phosphorus compound content on a phosphorus element basis would become 14 ppm by mass and 30 ppm by mass, respectively, with respect to 500 g of the regenerated polyester resin (d-1) produced.

Afterwards, the temperature of the system was raised up to 280°C in an hour while gradually reducing the pressure of the system to 0.15 kPa, and polycondensation reaction was performed under these conditions to give a regenerated polyester resin (d-1) having an IV of 0.59 dl/g and an acid value of 8 eq/ton. In the regenerated polyester resin (d-1), the residual amount of the aluminum element was 14 ppm by mass, the residual amount of the phosphorus element was 20 ppm by mass, and the residual mole ratio of the phosphorus element to the aluminum element was 1.25. The regenerated polyester resin (d-1) had an L-value of 59.0, a b-value of 5.3, and a glass transition temperature of 76°C.

(Examples 2 to 5, Comparative Example 1, and Reference Example 1)

The regenerated polyester resins (d-2) to (d-5) and the regenerated polyester resin (d'-1) were obtained in the same manner as Example 1 except that the amount of the recycled polyester resin (a) was changed to the amount shown in Table 2. In Comparative Example 1, however, the content of the recycled polyester resin (a) was too high, and a regenerated polyester resin could not be produced. In Example 5, the addition to above change, the glycol component for addition was changed to diethylene glycol in an amount equivalent to 10 mol%.

(Comparative Example 2)

The regenerated polyester resin (d-6) was obtained in the same manner as Example 1 except that the antimony catalyst was added on an antimony element basis of 300 ppm by mass with respect to 500 g of the regenerated polyester resin (d-6) produced, instead of the addition of aluminum compound-containing ethylene glycol solution "S" and the phosphorus compound-containing ethylene glycol solution "T".

(Reference Example 2)

The regenerated polyester resin (d'-2) was obtained in the same manner as Reference Example 1 except that the antimony catalyst was added on an antimony element basis of 250 ppm by mass with respect to 500 g of the regenerated polyester resin (d'-2) produced, instead of the addition of the aluminum compound-containing ethylene glycol solution "S" and the phosphorus compound-containing ethylene glycol solution "T".

(Example 6)

In a 2 L stainless steel autoclave quipped with a stirrer, 249.0 g of naphthalene dicarboxylic acid, 340.0 g of ethylene glycol, and 90.0 g of recycled polyester resin (b) were charged at one time, and heated up to 260°C under a pressure of 0.25 MPa to obtain a transparent polyester oligomer A. To the polyester oligomer A, 106.8 g of naphthalene dicarboxylic acid was added and the mixture was additionally treated under a pressure of 0.25 MPa, and a polyester oligomer B with an esterification rate of 90% was obtained. The polyester oligomer B was transparent and had an acid value of 650 eq/ton and a hydroxyl value of 1430 eq/ton.

To the oligomer thus obtained, one solution obtained by mixing the aluminum compound-containing ethylene glycol solution "S" and the phosphorus compound-containing ethylene glycol solution "T" prepared in the above-described manner was added. The one solution as a mixed solution was prepared so that the aluminum compound content on an aluminum element basis and the phosphorus compound content on a phosphorus element basis would become 30 ppm by mass and 74 ppm by mass, respectively, to the mass of the oligomer. The addition mole ratio of the aluminum element with respect to the phosphorus element was 2.15. The amount of the regenerated polyester resin (d-7) produced can be calculated from the amount of addition of naphthalenedicarboxylic acid and the amount of PEN resin. In Example 6, the one solution as a mixed solution was added so that the aluminum compound content on an aluminum element basis and the phosphorus compound content on a phosphorus element basis would become 30 ppm by mass and 74 ppm by mass, respectively, with respect to 500 g of the regenerated polyester resin (d-7) produced.

Afterwards, the temperature of the system was raised up to 290°C in an hour while gradually reducing the pressure of the system to 0.15 kPa, and polycondensation reaction was performed under these conditions to give a regenerated polyester resin (d-7) having an IV of 0.51 dl/g and an acid value of 33 eq/ton. In the regenerated polyester resin (d-7), the residual amount of the aluminum element was 30 ppm by mass, the residual amount of the phosphorus element was 54 ppm by mass, and the residual mole ratio of the phosphorus element with respect to the aluminum element was 1.56. The regenerated polyester resin (d-7) had an L-value of 62.2, a b-value of 6.2, and a glass transition temperature of 118°C.

(Comparative Example 3)

A regenerated polyester resin (d-8) was obtained in the same manner as Example 6 except that an antimony catalyst was added on an antimony element basis of 300 ppm by mass with respect to 500 g of the regenerated polyester resin (d-8) produced, instead of the addition of the aluminum compound-containing ethylene glycol solution "S" and the phosphorus compound-containing ethylene glycol solution "T".

(Reference Example 3)

A regenerated polyester resin (d'-3) was obtained in the same manner as Example 6 except that the amount

of the recycled polyester resin (b) was changed to the amount shown in Table 2.

(Reference Example 4)

A regenerated polyester resin (d'-4) was obtained in the same manner as Reference Example 3 except that an antimony catalyst was added on an antimony element basis of 300 ppm by mass with respect to 500 g of the regenerated polyester resin (d'-4) produced, instead of the addition of the aluminum compound-containing ethylene glycol solution "S" and the phosphorus compound-containing ethylene glycol solution "T".

Physical characteristics of the regenerated polyester resins produced in Examples, Comparative Examples, and Reference Examples are shown in Table 2.

[Table 2]

| | | Example 1 | Example 2 | Example 3 | Example 4 | Example 5 | Example 6 | Comparative Example 1 | Comparative Example 2 | Comparative Example 3 | Reference Example 1 | Reference Example 2 | Reference Example 3 | Reference Example 4 |
|---|---|---|---|---|---|---|---|---|---|---|---|---|---|---|
| Polyester resin (A) collected for recycling | Mass of recycled polyester resin (a) (g) | 40 | 90 | 180 | 300 | 90 | 0 | 420 | 90 | 0 | 0 | 0 | 0 | 0 |
| | Mass of recycled polyester resin (b) (g) | 0 | 0 | 0 | 0 | 0 | 90 | 0 | 0 | 90 | 0 | 0 | 0 | 0 |
| | Mass ratio (mass% with respect to regenerated polyester resin (D)) | 8 | 18 | 36 | 60 | 18 | 18 | 84 | 18 | 18 | 0 | 0 | 0 | 0 |
| Polycarboxylic acid (D) | TPA (mol%) | 100 | 100 | 100 | 100 | 100 | 0 | 100 | 100 | 0 | 100 | 100 | 0 | 0 |
| | NDCA (mol%) | 0 | 0 | 0 | 0 | 0 | 100 | 0 | 0 | 100 | 0 | 0 | 100 | 100 |
| Polyol (C) | EG (mol%) | 100 | 100 | 100 | 100 | 90 | 100 | 100 | 100 | 100 | 100 | 100 | 100 | 100 |
| | DEG (mol%) | 0 | 0 | 0 | 0 | 10 | 0 | 0 | 0 | 0 | 0 | 0 | 0 | 0 |

(continued)

| | | | Example 1 | Example 2 | Example 3 | Example 4 | Example 5 | Example 6 | Comparative Example 1 | Comparative Example 2 | Comparative Example 3 | Reference Example 1 | Reference Example 2 | Reference Example 3 | Reference Example 4 |
|---|---|---|---|---|---|---|---|---|---|---|---|---|---|---|---|
| Regenerated polyester resin (D) | Type | | d-1 | d-2 | d-3 | d-4 | d-5 | d-7 | - | d-6 | d-8 | d'-1 | d'-2 | d'-3 | d'-4 |
| | Mass (g) | | 500 | 500 | 500 | 500 | 500 | 500 | 500 | 500 | 500 | 500 | 500 | 500 | 500 |
| | Catalyst content (ppm) | Al | 14 | 14 | 14 | 14 | 14 | 30 | 14 | 0 | 0 | 14 | 0 | 30 | 0 |
| | | Sb | 0 | 0 | 0 | 0 | 0 | 0 | 0 | 300 | 300 | 0 | 250 | 0 | 300 |
| | Total metal content (ppm) | | 30 | 50 | 86 | 134 | 50 | 66 | 182 | 336 | 336 | 14 | 250 | 30 | 300 |
| | Phosphorus compound | Type | Irg1222 | Irg1222 | Irg1222 | Irg1222 | Irg1222 | Irg1222 | Irg1222 | - | - | Irg1222 | - | Irg1222 | - |
| | | Residual amount (ppm) | 20 | 20 | 20 | 20 | 20 | 54 | 20 | - | - | 20 | - | 54 | - |
| | Reduced viscosity (dl/g) | | 0.64 | 0.62 | 0.64 | 0.60 | 0.61 | 0.55 | Incompatible | 0.61 | 0.55 | 0.63 | 0.63 | 0.55 | 0.55 |
| | Intrinsic viscosity (dl/g) | | 0.59 | 0.57 | 0.59 | 0.55 | 0.56 | 0.51 | Incompatible | 0.56 | 0.51 | 0.58 | 0.58 | 0.51 | 0.51 |
| | Acid value (eq/ton) | | 8 | 13 | 9 | 11 | 13 | 33 | Incompatible | 11 | 39 | 9 | 12 | 30 | 41 |
| | Tg (°C) | | 76 | 75 | 77 | 76 | 71 | 118 | - | 77 | 119 | 77 | 77 | 118 | 118 |
| | L-value | | 59.0 | 58.0 | 55.5 | 53.3 | 56.3 | 62.2 | - | 51.5 | 55.1 | 60.1 | 58.9 | 64.6 | 63.1 |
| | a-value | | -0.9 | -1.5 | -1.4 | -1.1 | -1.5 | -1.1 | - | -1.5 | -1.4 | -1.1 | -1.1 | -1.1 | -1.4 |
| | b-value | | 5.3 | 6.8 | 8.8 | 10.0 | 8.9 | 6.2 | - | 7.5 | 7.4 | 5.2 | 4.4 | 4.1 | 3.9 |
| ΔTg (°C) (Difference from recycled resin) | | | 0 | 1 | 1 | 0 | -5 | 0 | - | 1 | 1 | - | - | - | - |
| Reference Example | | | Reference Example 1 | Reference Example 1 | Reference Example 1 | Reference Example 1 | Reference Example 1 | Reference Example 3 | - | Reference Example 2 | Reference Example 4 | - | - | - | - |

(continued)

| | Example 1 | Example 2 | Example 3 | Example 4 | Example 5 | Example 6 | Comparative Example 1 | Comparative Example 2 | Comparative Example 3 | Reference Example 1 | Reference Example 2 | Reference Example 3 | Reference Example 4 |
|---|---|---|---|---|---|---|---|---|---|---|---|---|---|
| ΔL (Difference from Reference Example) | 1.1 | 2.1 | 4.6 | 6.8 | 3.8 | 2.4 | - | 7.4 | 8.0 | - | - | - | - |
| Δb (Difference from Reference Example) | -0.1 | -1.6 | -3.6 | -4.8 | -3.7 | -2.1 | - | -3.1 | -3.5 | - | - | - | - |

<Use of recycled polyester resin (a)>

In Examples 1 to 5, the recycled polyester resin (a) and the aluminum catalyst were used in predetermined amounts in the production process, and the regenerated polyester resins (d-1) to (d-5) with high L-values as a scale of darkening and low b-values as a scale of yellowing were obtained.

In Comparative Example 1, the content of the recycled polyester resin (a) was too high, causing incompatibility. In Comparative Example 2, the antimony catalyst was used and thus an L-value became lower than the L-values in Examples 1 to 5, resulting in a significantly colored regenerated polyester resin (d-6).

<Use of recycled polyester resin (b)>

In Example 6, the recycled polyester resin (b) and the aluminum catalyst were used in predetermined amounts in the production process, and a regenerated polyester resin (d-7) with an high L-value as a scale of darkening and a low b-value as a scale of yellowing was obtained.

In Comparative Example 3, an antimony catalyst was used and thus an L-value became lower than the L-value in Example 6, resulting in a significantly colored regenerated polyester resin (d-8).

## Claims

1. A method for producing a regenerated polyester resin, comprising:

   the first step of mixing a polyester resin (A) collected for recycling, a polycarboxylic acid (B), and a polyol (C) followed by depolymerizing and esterifying the polyester resin (A); and
   the second step of performing polycondensation of a reactant produced by the first step to form the regenerated polyester resin, wherein
   a content of the polyester resin (A) is from 5 parts by mass to 80 parts by mass with respect to 100 parts by mass of the regenerated polyester resin,
   the polycondensation in the second step is performed in the presence of an aluminum compound, and
   a content of the aluminum compound is from 5 ppm by mass to 100 ppm by mass on an aluminum element basis with respect to the reactant produced by the first step.

2. The method for producing the regenerated polyester resin according to claim 1, wherein the polycondensation in the second step is performed with the presence of a phosphorus compound, and a content of the phosphorus compound is from 3 ppm by mass to 1000 ppm by mass on a phosphorus element basis with respect to the reactant.

3. The method for producing the regenerated polyester resin according to claim 2, wherein the phosphorus compound is a compound having phosphorus element and phenolic structure in the same molecule.

4. The method for producing the regenerated polyester resin according to claim 1 or 2, wherein the polyester resin (A) has a dicarboxylic acid unit originating from an aromatic dicarboxylic acid and a diol unit originating from an alkylene glycol having 2 to 6 carbon atoms.

5. The method for producing the regenerated polyester resin according to claim 1 or 2, wherein the polyester resin (A) comprises at least one element selected from the group consisting of antimony element, titanium element, and germanium element.

6. The method for producing the regenerated polyester resin according to claim 5, wherein the polyester resin (A) comprises at least one of the antimony element, the titanium element, and the germanium element with a total content of from 2 ppm by mass to 500 ppm by mass.

[Fig. 1]

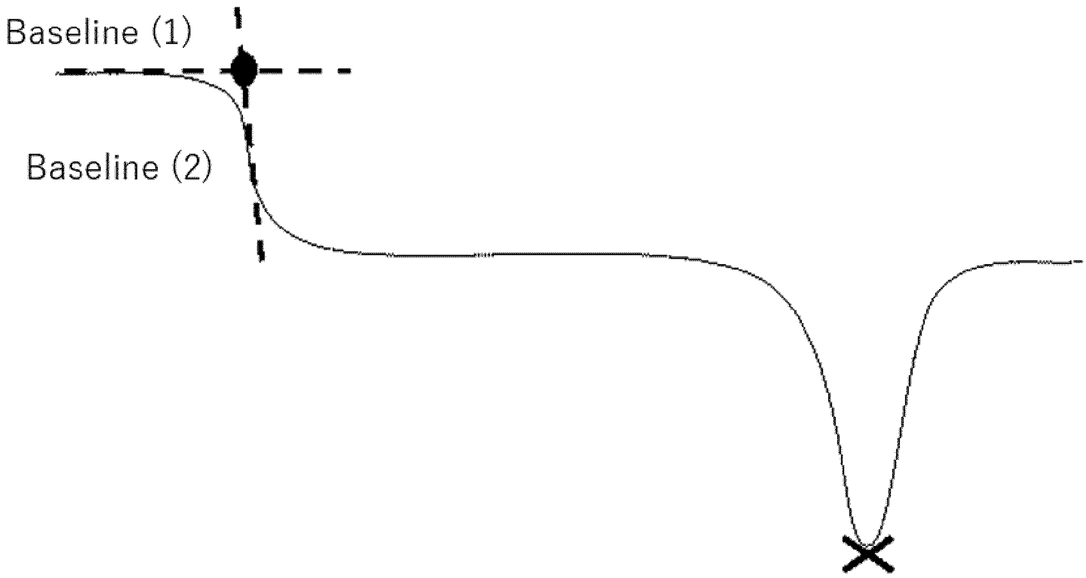

## INTERNATIONAL SEARCH REPORT

International application No.
**PCT/JP2022/035753**

**A. CLASSIFICATION OF SUBJECT MATTER**

***C08G 63/84***(2006.01)i
FI: C08G63/84

According to International Patent Classification (IPC) or to both national classification and IPC

**B. FIELDS SEARCHED**

Minimum documentation searched (classification system followed by classification symbols)

C08G63/84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| Y | JP 10-101784 A (NIPPON ESTER CO., LTD.) 21 April 1998 (1998-04-21) claim 1, paragraphs [0011], [0016], [0022], examples | 1-6 |
| Y | JP 46-015114 B1 (INVENTA AG FUER FORSCHUNG UND PATENTVERWERTUNG) 22 April 1971 (1971-04-22) claim 1, examples | 1-6 |
| Y | JP 2008-266359 A (TOYOBO CO., LTD.) 06 November 2008 (2008-11-06) claims 1-2, paragraphs [0014], [0099], [0150]-[0153], [0172] | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/035753**

| Patent document cited in search report | Publication date (day/month/year) | Patent family member(s) | Publication date (day/month/year) |
|---|---|---|---|
| JP 10-101784 A | 21 April 1998 | (Family: none) | |
| JP 46-015114 B1 | 22 April 1971 | (Family: none) | |
| JP 2008-266359 A | 06 November 2008 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000191766 A
- JP 2021161890 A